# FASCICULE DE BREVET EUROPEEN

(11) **EP 3 424 822 B1**
(45) Date de publication et mention de la délivrance du brevet: **13.05.2020**
(21) Numéro de dépôt: 18181503.6
(22) Date de dépôt: 03.07.2018
(51) Int. Cl.: B64D 31/04, B64D 31/06, G05G 1/04, G05G 5/00, G05G 5/03, G05G 11/00, G05G 9/047

(54) **SYSTÈME DE COMMANDE DE GAZ D'UN AÉRONEF**
GASSTEUERUNGSSYSTEM EINES LUFTFAHRZEUGS
SYSTEM FOR GAS CONTROL OF AN AIRCRAFT

(30) Priorité: 05.07.2017 FR 1756332
(43) Date de publication de la demande: 09.01.2019
(73) Titulaire: LORD Solutions France, 26600 Pont-de-l'Isère (FR)
(72) Inventeur: ROUSSEY, Bastien, 26600 Tain L'Hermitage (FR); EL FAGROUCHI, Rachid, 26800 Montoison (FR)
(74) Mandataire: Delorme, Nicolas

(56) Documents cités:
- EP-A1- 0 657 350
- EP-A1- 1 958 870
- EP-A2- 0 265 738
- DE-A1- 19 926 800
- FR-A1- 2 956 225
- US-A- 3 363 480

## Description

La présente invention concerne un système de commande de gaz d'un aéronef.

Pour commander le groupe propulseur d'un aéronef, notamment d'un avion de ligne, il est connu de fournir à ce groupe propulseur des données relatives à la position angulaire d'un arbre de commande autour d'un axe central de ce dernier : cet arbre est monté, de manière à pouvoir tourner autour de son axe, sur un bâti de l'aéronef, tout en étant lié solidairement à un levier d'actionnement qui est lui-même connecté à une manette de commande, dite manette de gaz, sur laquelle le pilote peut agir manuellement. En entraînant le levier d'actionnement par cette manette, le pilote fait tourner l'arbre par rapport au bâti, la variation du positionnement angulaire de l'arbre autour de son axe étant mesurée physiquement par un dispositif ad hoc capable de transmettre les résultats de mesure correspondants sous forme d'un signal électrique à un dispositif de contrôle moteur, qui conditionne ce signal et commande en conséquence la poussée produite par le groupe propulseur, selon le sens et l'amplitude de l'entraînement de la manette de gaz. Une liaison à friction est fonctionnellement interposée sans jeu entre le bâti et l'arbre : de cette façon, en l'absence de sollicitation sur la manette de gaz, l'arbre conserve une position angulaire fixe, ce qui permet au pilote de lâcher la manette de gaz tout en étant sûr que la poussée de propulsion qu'il a réglée sera maintenue. Bien entendu, afin que le pilote entraîne en rotation l'arbre en agissant sur la manette de gaz, le pilote doit surpasser la résistance que cette liaison à friction applique pour empêcher par friction l'entraînement de l'arbre par rapport au bâti.

De plus, notamment dans les avions de ligne modernes, un tel système de commande de gaz se doit de pouvoir assurer une régulation automatique, en remplaçant, quand cela est voulu par le pilote, l'action de ce dernier sur la manette de gaz. Cette régulation automatique est assurée par un dispositif ad hoc, qui est parfois appelé « automanette » et qui est couramment désigné par l'expression anglaise « auto throttle » ou bien « AT » en abrégé. Ce dispositif « AT » ne relie pas directement un ordinateur de bord de l'aéronef au dispositif de contrôle moteur, mais agit mécaniquement sur l'arbre de commande précité pour l'entraîner en rotation, ce qui entraîne d'ailleurs de manière correspondante le levier d'actionnement et, par-là, la manette de gaz en elle-même dont le déplacement peut être observé par le pilote. Pour des raisons de sécurité, le pilote doit pouvoir, à tout moment et y compris lorsque le dispositif « AT » est enclenché, agir manuellement sur la manette et commander ainsi la position de l'arbre précité prioritairement au dispositif « AT ». Pour ce faire, la sortie motrice d'un groupe motoréducteur du dispositif « AT » est accouplée de manière irréversible à l'arbre via la liaison à friction précitée : en d'autres termes, le point d'ancrage de la liaison à friction est formé par une pièce d'accouplement irréversible, au travers de laquelle la sortie motrice transmet son mouvement vers l'arbre. En pratique, cet accouplement irréversible est généralement réalisé par une vis sans fin qui est liée solidairement en rotation à la sortie motrice et qui, par exemple, engrène dans une couronne contre laquelle frotte l'arbre en appliquant la résistance de la liaison à friction, l'engrènement entre cette vis sans fin et cette couronne étant irréversible dans le sens où la vis sans fin peut entraîner la couronne mais la couronne ne peut pas entraîner la vis sans fin en raison des frottements entre elles, de l'angle de l'hélice de la vis sans fin, etc. L'irréversibilité de cet accouplement fait que, tant que le pilote n'oppose pas, par la manette de gaz, une résistance supérieure à la résistance de la liaison à friction, la vis sans fin peut entraîner l'arbre de commande par l'intermédiaire de la couronne et de la liaison à friction, sans que l'entraînement inverse ne soit possible.

Ceci étant, l'utilisation d'un tel accouplement irréversible, notamment réalisé par la vis sans fin et la couronne précitées, induit un jeu dans cet accouplement : même si ce jeu est faible, ce dernier n'est pas acceptable dans un système de commande de gaz d'aéronef, dans le sens où une variation même infime dans le positionnement angulaire de l'arbre de commande résultant de l'action du dispositif « AT » conduit à propulser l'avion avec une poussée qui ne peut être ajustée suffisamment précisément.. Pour contourner cette problématique et assurer une transmission sans jeu pour l'accouplement du dispositif « AT », il est connu soit de rajouter une liaison à friction entre la couronne et le bâti, soit de plaquer par un ressort la denture de la vis sans fin contre celle de la couronne : dans le premier cas, le groupe motoréducteur du dispositif « AT » doit être surdimensionné pour vaincre la résistance de la liaison à friction rajoutée ; dans le second cas, les pressions de contact plus élevées associées aux grandes vitesses de glissement entre les dentures de la vis sans fin et de la couronne induisent à la longue une usure de ces dentures. Dans les deux cas, le risque de défaillance du dispositif « AT » est donc augmenté et la durée de vie du dispositif en est réduite.

De son côté, US 3 363 480 divulgue un système de commande de gaz d'un avion, qui comporte un arbre principal central, un levier de commande manuelle, un dispositif de liaison à friction, et un dispositif de régulation automatique incluant un groupe motoréducteur et un embrayage d'accouplement avec l'arbre. Pour entraîner le levier en rotation autour de l'axe de l'arbre, le pilote doit agir manuellement sur ce levier en surpassant une résistance qu'oppose le dispositif de pilotage automatique grâce au fait que le levier n'est pas lié solidairement en rotation à l'arbre, mais est lié en rotation à cet arbre par l'intermédiaire de deux planétaires extérieurs qui engrènent à la fois une couronne interne d'un anneau du levier et un planétaire intérieur lié solidairement à l'arbre. US 3 363 480 prévoit que l'accouplement entre son groupe motoréducteur et l'arbre ne se fait pas par le dispositif de liaison à friction, mais exclusivement et directement par l'embrayage.

EP 0 657 350 divulgue, quant à lui, un système de commande de gaz d'un avion, comportant deux manettes. Chaque manette est liée solidairement en rotation à un élément annulaire, chacun de ces éléments annulaires pouvant être considéré comme formant un arbre principal qui est monté rotatif autour d'un arbre fixe, la position angulaire de chacun des éléments annulaires permettant de commander un moteur de propulsion de l'avion (cette position angulaire étant détectée par des capteurs respectifs). Aucune liaison à friction n'est prévue pour empêcher par friction l'entraînement des éléments annulaires en rotation autour de l'arbre fixe en appliquant une résistance que le pilote devrait manuellement surpasser pour entraîner la manette correspondante. En revanche, il est prévu un dispositif de régulation automatique, qui inclut un groupe motoréducteur et des moyens d'accouplement entre la sortie de ce groupe motoréducteur et les éléments annulaires : ces moyens d'accouplement comprennent des coupleurs électromagnétiques qui, lorsqu'ils sont excités, serrent des disques de friction les uns contre les autres de manière à réaliser une solidarisation entre l'élément annulaire et un organe d'entraînement couplé à la sortie du groupe motoréducteur par une courroie.

Le but de la présente invention est d'améliorer les systèmes de commande de gaz intégrant un dispositif « AT », en limitant les risques de défaillance de ce dispositif « AT » et en augmentant sa durée de vie.

A cet effet, l'invention a pour objet un système de commande de gaz d'un aéronef, tel que défini à la revendication 1.

Des caractéristiques additionnelles avantageuses du système de commande conforme à l'invention sont spécifiées aux revendications dépendantes.

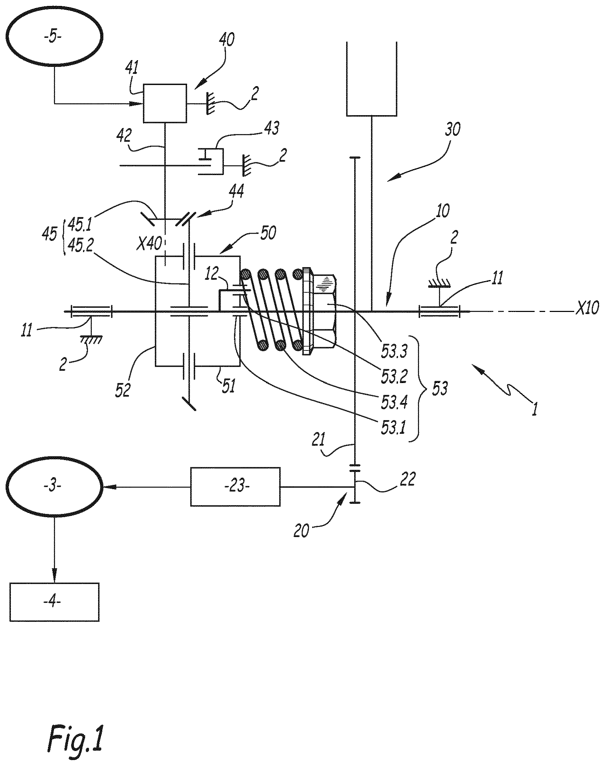

L'invention sera mieux comprise à la lecture de la description qui va suivre, donnée uniquement à titre d'exemple et faite en se référant aux dessins sur lesquels la figure 1 est un schéma d'un système de commande conforme à l'invention.

Sur la figure 1 est représenté un système 1 permettant de commander les gaz d'un aéronef, notamment d'un avion de ligne.

Le système 1 comprend un arbre principal 10 définissant un axe principal X10, le long duquel s'étend l'arbre principal 10 et sur lequel cet arbre est centré. L'arbre principal 10 est monté rotatif autour de l'axe principal X10 par rapport à un bâti 2 de l'aéronef, par exemple par l'intermédiaire de paliers 11 ou, plus généralement, de tout organe assurant la libre rotation de l'arbre principal 10 autour de l'axe principal X10 par rapport au bâti 2.

Le système de commande 1 comporte également un dispositif de mesure 20 permettant de mesurer physiquement la position angulaire de l'axe principal 10 autour de l'axe principal X10. A titre d'exemple illustratif et non limitatif, ce dispositif de mesure 20 comporte une grande roue 21, qui est liée solidairement en rotation autour de l'axe principal X10 à l'arbre principal 10 et qui entraîne, par exemple par engrènement sans jeu, un pignon 22 d'un capteur 23 produisant des signaux représentatifs de la position angulaire de son pignon 22 et donc de la grande roue 21 et de l'arbre principal 10. Le dispositif de mesure 20 transmet le résultat de la mesure qu'il opère, par exemple transmet les signaux produits par le capteur 23, un dispositif de contrôle moteur 3, communément appelé « FADEC » (acronyme de l'expression anglaise « Full Authority Digital Engine Control »). Le dispositif de contrôle moteur 3 est prévu pour conditionner et traiter ce résultat de mesure et commande en conséquence un groupe propulseur 4 de l'aéronef de manière à régler la poussée produite par ce groupe de propulseur en fonction de la position angulaire de l'arbre principal 10 autour de l'axe principal X10. Les considérations techniques relatives au dispositif de mesure 20 et au dispositif de contrôle moteur 3, ainsi qu'à la commande de la propulsion de l'aéronef en fonction de la position angulaire de l'axe principal 10 autour de l'axe principal X10, ne seront pas détaillées ici davantage puisqu'elles relèvent de la technique connue et ne sont pas limitatives de l'invention.

Afin qu'un pilote à bord de l'aéronef puisse agir manuellement sur la position angulaire de l'arbre principal 10 autour de l'axe principal X10, le système de commande 1 comprend un levier 30. Ce levier 30 permet d'actionner l'arbre principal, en étant lié solidairement en rotation autour de l'axe principal X10 à l'arbre principal 10. De plus, ce levier 30 est actionnable manuellement par le pilote, en étant connecté à une manette manipulable directement par le pilote, couramment appelée manette de gaz. Là encore, les considérations techniques relatives au levier 30 et à sa connexion à la manette de gaz ne seront pas détaillées ici davantage puisqu'elles relèvent de la technique connue et ne sont pas limitatives de l'invention.

Le système de commande 1 comprend également un dispositif de régulation automatique 40 qui est capable de commander automatiquement l'entraînement de l'arbre principal 10 en rotation autour de l'axe principal 10. Ce dispositif de régulation automatique 40 permet donc de remplacer, vis-à-vis de l'arbre principal 10, l'action du pilote sur le levier 30, étant entendu que l'enclenchement de ce dispositif de régulation automatique 40 est décidé par le pilote. En lien avec les considérations développées en introduction du présent document, on comprend que le dispositif de régulation automatique 40 s'apparente à un dispositif dit « AT », c'est-à-dire un dispositif « auto throttle ».

Le dispositif de régulation automatique 40 comprend un groupe motoréducteur 41 qui, comme indiqué schématiquement sur la figure 1, est porté fixement par le bâti 2. Le groupe motoréducteur 41 intègre, à la fois, un moteur, commandé par l'ordinateur de bord 3, et un réducteur, constitué par exemple d'engrenages, transmettant, de manière réversible et avec un rapport de réduction défini, le mouvement produit par le moteur à une sortie mécanique 42 du groupe motoréducteur 41. L'activation du groupe motoréducteur 41 est commandée par le pilote, dans le sens où l'enclenchement par le pilote du dispositif de régulation automatique 40 rend possible une activation du groupe motoréducteur 41, notamment en alimentant en énergie le moteur de ce dernier afin que ce moteur puisse répondre à des instructions de commande provenant d'un ordinateur de bord 5 de l'aéronef, tandis que le désenclenchement par le pilote du dispositif de régulation automatique 40 désactive le groupe motoréducteur 41. Les aspects relatifs à l'ordinateur de bord 5, en particulier à ses fonctions de pilotage automatique, ne seront pas détaillés ici car ils sont bien connus, en tant que tels, dans le domaine des avions modernes.

Suivant une forme de réalisation préférentielle qui est mise en œuvre dans l'exemple de réalisation de la figure 1, la sortie 42 du groupe motoréducteur 41 est entraînable, par le moteur et le réducteur de ce groupe motoréducteur, en rotation autour d'un axe secondaire X40, la sortie 42 formant alors un arbre de sortie rotatif sur lui-même autour de cet axe secondaire X40. Dans la forme de réalisation de la figure 1, l'axe secondaire X40 s'étend perpendiculairement à l'axe principal X10.

Le dispositif de régulation 40 comporte également des moyens de frein 43 qui sont portés fixement par le bâti 2. Les moyens de frein 43 sont adaptés pour empêcher l'entraînement en déplacement de la sortie 42 du groupe motoréducteur 41 par rapport au bâti 2, en appliquant à cet effet une résistance mécanique, appelée résistance R40 par la suite.

La forme de réalisation des moyens de frein 43 n'est pas limitative de l'invention. Suivant une forme préférentielle, ces moyens de frein 43 sont à friction, en empêchant par friction l'entraînement en déplacement de la sortie 42 du groupe motoréducteur 41 : comme indiqué schématiquement sur la figure 1, les moyens de frein 43 peuvent par exemple agir par frottement contre la périphérie d'une roue liée solidairement en rotation autour de l'axe secondaire X40 à la sortie 42.

Le dispositif de régulation automatique 40 comporte en outre des moyens d'accouplement mécaniques 44 qui permettent de transmettre, sans jeu et de manière réversible, le mouvement entre la sortie 42 du groupe motoréducteur 41 et l'arbre principal 10 via des moyens de liaison à friction 50 interposés entre l'arbre principal 10 et les moyens d'accouplement 44. En d'autres termes, les moyens d'accouplement 44 transmettent sans jeu les mouvements, aussi bien dans un sens que dans le sens opposé, entre la sortie 42 et les moyens de liaison à friction 50, ces derniers reliant par friction les moyens d'accouplement 44 à l'arbre principal 10 en étant ainsi fonctionnellement interposés sans jeu entre l'arbre principal 10 et le bâti 2 via le dispositif de régulation automatique 40. Les moyens de liaison à friction 50 sont conçus pour empêcher par friction l'entraînement de l'arbre principal 10 en rotation autour de l'axe principal X10 en appliquant une résistance, appelée résistance R50 par la suite, qui est plus petite, par exemple deux fois plus petite voire davantage, que la résistance R40. On comprend donc que, aussi bien quand le dispositif de régulation automatique 40 est désactivé que quand ce dispositif de régulation automatique est activé, le pilote, souhaitant modifier la commande de gaz de l'aéronef, doit surpasser la résistance R50 pour entraîner en rotation l'arbre principal 10, en agissant manuellement sur le levier 30 par le biais de la manette de gaz précitée. On comprend également que, quand le dispositif de régulation automatique 40 est activé, ce dispositif de régulation automatique peut, selon les instructions de commande envoyées par l'ordinateur de bord 5 au groupe motoréducteur 41, assurer une rotation de l'arbre principal 10 autour de l'axe principal X10, mais ce uniquement tant qu'une résistance à cette rotation reste inférieure à la résistance R50 et donc que les moyens de liaison à friction 50 maintiennent la liaison fixe en rotation entre l'arbre principal 10 et les moyens d'accouplement 44 : dès lors que le pilote applique à l'arbre principal 10, en agissant sur le levier 30, une résistance supérieure à la résistance R50, le pilote rompt la liaison d'entraînement entre l'arbre principal 10 et les moyens d'accouplement 44 au niveau des moyens de liaison à friction 50.

Suivant une forme de réalisation préférentielle, qui est mise en œuvre dans l'exemple de la figure 1, les moyens d'accouplement 44 comprennent un engrenage 45, réversible et sans jeu, incluant :
- une roue dentée 45.1, pouvant s'apparenter à un pignon, qui est liée solidairement en rotation autour de l'axe secondaire X40 à la sortie 42 du groupe motoréducteur 41, la solidarisation entre la roue dentée 45.1 et la sortie 42 pouvant par exemple être réalisée par prise directe entre elles ; et
- une roue dentée 45.2, liée solidairement en rotation autour de l'axe principal X10 à l'arbre principal 10 par les moyens de liaison à friction 50.

En pratique, la forme de réalisation de l'engrenage 45 n'est pas limitative, du moment qu'il soit réversible et sans jeu. Ainsi, les dentures respectives des roues 45.1 et 45.2 peuvent être prévues droites, hélicoïdales, etc.

Pour le cas de réalisation envisagé à la figure 1, dans lequel l'axe principal X10 et l'axe secondaire X40 s'étendent perpendiculairement l'un à l'autre, l'engrenage 45 peut avantageusement être prévu conique ou intégré à un renvoi d'angle.

Egalement suivant une forme de réalisation préférentielle, mise en œuvre à la figure 1, les moyens de liaison à friction 50 comportent une ou plusieurs pièces de friction, deux telles pièces de friction 51 et 52 étant prévues dans l'exemple de réalisation de la figure 1, en étant agencées de part et d'autre, selon l'axe principal X10, de la roue dentée 45.2. Chacune des pièces de friction 51 et 52 est liée solidairement à l'arbre principal 10 à la fois en rotation autour de l'axe principal X10 et en translation selon cet axe principal. De plus, chacune des pièces de friction 51 et 52 frotte sans jeu contre la roue dentée 45.2 de manière à générer la résistance R50 entre cette roue dentée 45.2 et les pièces de friction 51 et 52. Comme indiqué schématiquement sur la figure 1, le frottement entre la roue dentée 45.2 et chacune des pièces de friction 51 et 52 peut par exemple être à contact plan, étant souligné que, en variante, d'autres formes de réalisation sont envisageables pour les interfaces de frottement sans jeu entre la roue dentée 45.2 et les pièces de friction 51 et 52, plus généralement entre les moyens d'accouplement 44 et les moyens de liaison à friction 50.

Suivant une disposition pratique particulièrement avantageuse, la pièce de friction 52 est mise directement en prise avec l'arbre principal 10 tandis que la pièce de friction 51 est reliée à l'arbre principal 10 par un dispositif d'assemblage 53 qui assure, à la fois, la mise en pression de l'interface de frottement entre la pièce de friction 51 et la roue dentée 45.2 et le blocage en rotation entre cette pièce de friction 51 et l'arbre principal 10. Dans la forme de réalisation illustrée à la figure 1, ce dispositif d'assemblage 53 comprend :
- une glissière 53.1 formant une liaison glissière, selon l'axe principal X10, entre la pièce de friction 51 et l'arbre principal 10 ;
- une glissière 53.2 formant une liaison glissière, selon un axe parallèle à et décalé de l'axe principal X10, entre la pièce de friction 51 et un bras excentré 12 de l'arbre 10 ;
- un écrou 53.3 qui est vissé sur l'arbre principal 10 et qui, en service, est bloqué par un contre-écrou ou un arrêt similaire ; et
- un ressort de compression 53.4 interposé, selon l'axe principal X10, entre l'écrou 53.3 et la pièce de friction 51.

Quelle que soit la forme de réalisation du dispositif d'assemblage 53, on comprend qu'il permet, à la fois, de bloquer sans jeu la rotation autour de l'axe principal X10 entre la pièce de friction 51 et l'arbre principal 10, et de presser élastiquement la pièce de friction 51 contre la roue dentée 45.2 sensiblement selon l'axe principal X10. De cette façon, la réalisation et le réglage de la résistance R50 peuvent être opérés de manière facile et précise.

En tenant compte des explications données jusqu'ici, on comprend que le dispositif de régulation automatique 40 se distingue du dispositif « AT » décrit en introduction du présent document, par le fait que ses moyens d'accouplement 44 réalisent un accouplement réversible entre la sortie 42 du groupe motoréducteur 41 et l'arbre principal 10. Un tel accouplement réversible est facilement prévu sans jeu, par exemple en utilisant l'engrenage 45, et ce sans générer de problème d'usure en raison du fait que les courses et les vitesses de glissement au sein d'un tel accouplement réversible, par exemple entre les dentures respectives des roues dentées 45.1 et 45.2, sont substantiellement moindres qu'au sein d'un accouplement irréversible, par exemple entre les dentures respectives d'une vis sans fin et d'une couronne en prise sur cette vis sans fin. L'usure du dispositif de régulation automatique 40 s'en trouve substantiellement réduite, ce qui augmente sa durée de vie et en limite les risques de défaillance. Par ailleurs, comme l'ancrage du dispositif de régulation automatique 40 n'est pas assuré par une irréversibilité de ces moyens d'accouplement 44, le dispositif de régulation automatique 40 est ancré, vis-à-vis du bâti 2, par les moyens de frein 43 qui, comme indiqué schématiquement sur la figure 1, sont distincts des moyens d'accouplement 44 : comme la résistance R50 appliquée par ces moyens de frein 43 est plus grande que la résistance R50 produite par les moyens de liaison à friction 50, le pilote ne voit pas la réversibilité des moyens d'accouplement 44, dans le sens où, vis-à-vis du pilote, l'ensemble du dispositif de régulation automatique 40 est ancré au bâti 10 lorsque le pilote agit manuellement sur le levier 30 jusqu'à surpasser la résistance R50 afin d'entraîner en rotation l'arbre principal 10.

On notera que l'agencement, en quelque sorte en série, des résistances R50 et R40 vis-à-vis du pilote de l'aéronef procure un avantage sécuritaire supplémentaire : en cas de grippage des moyens de liaison à friction 50, le pilote reste en mesure d'entraîner en rotation l'arbre principal 10 en agissant manuellement sur le levier 30, par forçage réversible du dispositif de régulation automatique 40, du moment que le pilote puisse surpasser la résistance R40 appliquée par les moyens de frein 43. En pratique, cela passe par un agencement et/ou un dimensionnement ad hoc des moyens de frein 43, garantissant que le pilote puisse surpasser la résistance R40 en cas de défaillance des moyens de liaison à friction 50 conduisant à ce que l'arbre principal 10 se retrouve solidarisé en permanence aux moyens d'accouplement 44. Comme le dispositif de régulation automatique 40 est très régulièrement enclenché au cours de la vie de l'aéronef, toute défaillance au niveau du moyen de frein 43 sera rapidement détectée, sans faire courir de risque à l'aéronef puisque ce dernier reste pilotable manuellement.

Suivant un aspect secondaire de l'invention, les moyens de frein 43 peuvent être prévus soit passifs, soit actifs. Autrement dit, dans une première forme de réalisation possible selon laquelle les moyens de frein 43 sont passifs, ces moyens de frein appliquent la résistance R40 aussi bien lorsque le groupe motoréducteur 41 entraîne la sortie 42 que lorsque le groupe motoréducteur n'entraîne pas cette sortie : on comprend que dans cette forme de réalisation, le moteur du groupe motoréducteur doit, pour effectivement entraîner sa sortie 42, surpasser la résistance R40. Selon une seconde forme de réalisation possible dans laquelle les moyens de frein 43 sont actifs, en étant par exemple à manque de courant, ces moyens de frein n'appliquent la résistance R40 que lorsque le groupe motoréducteur 41 n'entraîne pas sa sortie 42.

Divers aménagements et variantes au système de commande 1 décrit jusqu'ici sont par ailleurs envisageables :
- plutôt que d'être perpendiculaire à l'axe principal X10, l'axe secondaire X40 peut former avec l'axe principal X10 un angle différent de 90°, voire peut s'étendre parallèlement à l'axe principal X10 ; bien entendu, les moyens d'accouplement 44 sont adaptés en conséquence ; et/ou
- d'autres cinématiques d'entraînement, qu'une rotation autour de l'axe secondaire X40, peuvent être envisagées pour la sortie 42 du groupe motoréducteur 41 ; là encore, les moyens d'accouplement 44 sont adaptés en conséquence.

## Revendications

1. Système de commande de gaz d'un aéronef, comportant :
- un arbre principal (10), qui définit un axe principal (X10), qui est monté librement rotatif autour de l'axe principal par rapport à un bâti (2) de l'aéronef, et dont la position angulaire autour de l'axe principal commande une propulsion de l'aéronef,
- un levier (30), qui est lié solidairement en rotation autour de l'axe principal (X10) à l'arbre principal (10) et qui est actionnable manuellement par un pilote,
- des moyens de liaison à friction (50), qui sont fonctionnellement interposés sans jeu entre l'arbre principal (10) et le bâti (2) et qui sont adaptés pour empêcher par friction l'entraînement de l'arbre principal en rotation autour de l'axe principal (X10) par rapport au bâti en appliquant une première résistance, cette première résistance étant prévue pour être surpassée par le pilote agissant manuellement sur le levier pour entraîner l'arbre principal en rotation autour de l'axe principal, et
- un dispositif de régulation automatique (40), qui est capable de commander automatiquement l'entraînement de l'arbre principal (10) en rotation autour de l'axe principal (X10) et qui comprend :
- un groupe motoréducteur (41), porté fixement par le bâti (2) et ayant une sortie (42) qui est entraînable en déplacement par rapport au bâti par un moteur et un réducteur du groupe motoréducteur,
- des moyens d'accouplement (44) mécaniques, qui sont adaptés pour transmettre, sans jeu et de manière réversible, le mouvement entre la sortie (42) du groupe motoréducteur (41) et l'arbre principal (10) via les moyens de liaison par friction (50), de manière à, par actionnement du groupe motoréducteur, assurer une rotation de l'arbre principal (10) autour de l'axe principal (X10) par rapport au bâti (2) tant qu'une résistance à cette rotation reste inférieure à la première résistance, et
- des moyens de frein (43) qui sont distincts des moyens d'accouplement (44), ces moyens de frein étant portés fixement par le bâti (2) et étant adaptés pour empêcher l'entraînement en déplacement de la sortie (42) du groupe motoréducteur (41) par rapport au bâti (2) en appliquant une seconde résistance qui est plus grande que la première résistance.

2. Système de commande suivant la revendication 1, **caractérisé en ce que** la sortie (42) du groupe motoréducteur (41) est entraînable en rotation autour d'un axe secondaire (X40), et **en ce que** les moyens d'accouplement (44) comprennent un engrenage (45) réversible et sans jeu, incluant une première roue dentée (45.1), liée solidairement en rotation autour de l'axe secondaire à la sortie du groupe motoréducteur, et une seconde roue dentée (45.2), liée solidairement en rotation autour de l'axe principal (X10) à l'arbre principal (10) par les moyens de liaison en friction (50).

3. Système de commande suivant la revendication 2, **caractérisé en ce que** l'axe secondaire (X40) s'étend perpendiculairement à l'axe principal (X10), et **en ce que** l'engrenage (45) est conique ou intégré à un renvoi d'angle.

4. Système de commande suivant l'une des revendications 2 ou 3, **caractérisé en ce que** les moyens de liaison à friction (50) comportent au moins une pièce de friction (51, 52) qui :
- est liée solidairement à l'arbre principal (10) à la fois en rotation autour de l'axe principal (X10) et en translation selon l'axe principal, et
- frotte sans jeu contre la seconde roue dentée (45.2) de manière à générer la première résistance entre la seconde roue dentée et la pièce de friction.

5. Système de commande suivant la revendication 4, **caractérisé en ce qu'**il est prévu deux pièces de friction (51, 52) qui sont agencées de part et d'autre, selon l'axe principal (X10), de la seconde roue dentée (45.2).

6. Système de commande suivant l'une des revendications 4 ou 5, **caractérisé en ce que** la pièce de friction ou l'une (45.2) des pièces de friction est reliée à l'arbre principal (10) par un dispositif d'assemblage (53) qui est adapté, à la fois, pour bloquer sans jeu la pièce de friction et l'arbre principal (10) en rotation autour de l'axe principal (X10) l'un par rapport à l'autre, et pour presser élastiquement ladite pièce de friction contre la seconde roue dentée (45.2).

7. Système de commande suivant l'une quelconque des revendications précédentes, **caractérisé en ce que** les moyens de frein (43) sont à friction, en empêchant par friction l'entraînement en déplacement de la sortie (42) du groupe motoréducteur (41).

8. Système de commande suivant l'une quelconque des revendications précédentes, **caractérisé en ce que** les moyens de frein (43) sont passifs de manière à appliquer la seconde résistance aussi bien lorsque le groupe motoréducteur (41) entraîne en déplacement la sortie (42) que lorsque le groupe motoréducteur n'entraîne pas en déplacement la sortie.

9. Système de commande suivant l'une quelconque des revendications 1 à 7, **caractérisé en ce que** les moyens de frein (43) sont actifs de manière à n'appliquer la seconde résistance que lorsque le groupe motoréducteur (41) n'entraîne pas en déplacement la sortie (42).

10. Système de commande suivant l'une quelconque des revendications précédentes, **caractérisé en ce que** les moyens de frein (43) sont conçus de façon qu'en cas de grippage des moyens de liaison à friction (50), la seconde résistance puisse être surpassée par le pilote agissant manuellement sur le levier (30) pour entraîner l'arbre principal (10) en rotation autour de l'axe principal (X10).

## Patentansprüche

1. Gassteuerungssystem eines Luftfahrzeugs, Folgendes beinhaltend:
- eine Hauptwelle (10), die eine Hauptachse (X10) definiert, die in Bezug auf ein Gestell (2) des Luftfahrzeugs um die Hauptachse frei drehend montiert ist, und deren Winkelposition um die Hauptachse herum einen Vortrieb des Luftfahrzeugs steuert,
- einen Hebel (30), der um die Hauptachse (X10) drehend fest mit der Hauptwelle (10) verbunden ist, und der durch einen Piloten von Hand betätigbar ist,
- Reibverbindungsmittel (50), die funktionell spielfrei zwischen der Hauptwelle (10) und dem Gestell (2) eingesetzt sind, und die ausgeführt sind, um durch Reibung den Antrieb der Hauptwelle in Drehung um die Hauptachse (X10) herum in Bezug auf das Gestell durch Anlegen eines ersten Widerstands zu verhindern, wobei dieser erste Widerstand vorgesehen ist, um durch den Piloten, der von Hand auf den Hebel einwirkt, um die Hauptwelle in Drehung um die Hauptachse anzutreiben, überwunden zu werden, und
- eine automatische Regelungsvorrichtung (40), die imstande ist, automatisch den Antrieb der Hauptwelle (10) in Drehung um die Hauptachse (X10) zu steuern, und die Folgendes umfasst:
- eine Getriebemotorgruppe (41), die feststehend von dem Gestell (2) getragen wird, und einen Ausgang (42) aufweist, der in Bezug auf das Gestell durch einen Motor und ein Getriebe der Getriebemotorgruppe in Verschiebung antreibbar ist,
- mechanische Kopplungsmittel (44), die ausgeführt sind, um spielfrei und umkehrbar die Bewegung zwischen dem Ausgang (42) der Getriebemotorgruppe (41) und der Hauptwelle (10) anhand der Reibverbindungsmittel (50) zu übertragen, um durch Betätigen der Getriebemotorgruppe für eine Drehung der Hauptwelle (10) um die Hauptachse (X10) herum in Bezug auf das Gestell (2) zu sorgen, solange ein Widerstand gegen diese Drehung kleiner als der erste Widerstand bleibt, und
- Bremsmittel (43), die sich von den Kopplungsmitteln (44) unterscheiden, wobei diese Bremsmittel feststehend durch das Gestell (2) getragen werden, und ausgeführt sind, den Verschiebeantrieb des Ausgangs (42) der Getriebemotorgruppe (41) in Bezug auf das Gestell (2) zu verhindern, indem ein zweiter Widerstand, der größer ist als der erste Widerstand, angewendet wird.

2. Steuerungssystem nach Anspruch 1, **dadurch gekennzeichnet, dass** der Ausgang (42) der Getriebemotorgruppe (41) um eine Sekundärachse (X40) in Drehung antreibbar ist, und dadurch, dass die Kopplungsmittel (44) eine umkehrbare und spielfreie Verzahnung (45) umfassen, die ein erstes Zahnrad (45.1), das um die Sekundärachse herum drehfest mit dem Ausgang der Getriebemotorgruppe verbunden ist, und ein zweites Zahnrad (45.2) beinhaltet, das um die Hauptachse (X10) herum durch die Reibverbindungsmittel (50) drehfest mit der Hauptwelle (10) verbunden ist.

3. Steuerungssystem nach Anspruch 2, **dadurch gekennzeichnet, dass** sich die Sekundärachse (X40) senkrecht zur Hauptachse (X10) erstreckt, und dadurch, dass die Verzahnung (45) konisch ist oder in ein Winkelgetriebe integriert ist.

4. Steuerungssystem nach einem der Ansprüche 2 oder 3, **dadurch gekennzeichnet, dass** die Reibverbindungsmittel (50) mindestens ein Reibteil (51, 52) beinhalten, das:
- mit der Hauptwelle (10) sowohl um die Hauptachse (X10) drehend und in Translation entlang der Hauptachse fest verbunden ist, und
- sich spielfrei an dem zweiten Zahnrad (45.2) reibt, um den ersten Widerstand zwischen dem zweiten Zahnrad und dem Reibteil zu generieren.

5. Steuerungssystem nach Anspruch 4, **dadurch gekennzeichnet, dass** zwei Reibteile (51, 52) vorgesehen sind, die beiderseits entlang der Hauptachse (X10) des zweiten Zahnrades (45.2) angeordnet sind.

6. Steuerungssystem nach einem der Ansprüche 4 oder 5, **dadurch gekennzeichnet, dass** das Reibteil oder das eine (45.2) der Reibteile durch eine Montagevorrichtung (53) mit der Hauptwelle (10) verbunden ist, die sowohl ausgeführt ist, das Reibteil und die Hauptwelle (10) spielfrei in Drehung um die Hauptachse (X10) zueinander zu blockieren, als auch das Reibteil elastisch an das zweite Zahnrad (45.2) zu pressen.

7. Steuerungssystem nach einem der vorstehenden Ansprüche, **dadurch gekennzeichnet, dass** die Bremsmittel (43) reibend sind, indem sie durch Reibung den Verschiebeantrieb des Ausgangs (42) der Getriebemotorgruppe (41) verhindert.

8. Steuerungssystem nach einem der vorstehenden Ansprüche, **dadurch gekennzeichnet, dass** die Bremsmittel (43) passiv sind, um den zweiten Widerstand sowohl dann anzulegen, wenn die Getriebemotorgruppe (41) den Ausgang (42) verschiebend antreibt, als auch wenn die Getriebemotorgruppe den Ausgang nicht verschiebend antreibt.

9. Steuerungssystem nach einem der Ansprüche 1 bis 7, **dadurch gekennzeichnet, dass** die Bremsmittel (43) aktiv sind, um den zweiten Widerstand nur dann anzulegen, wenn die Getriebemotorgruppe (41) den Ausgang (42) nicht verschiebend antreibt.

10. Steuerungssystem nach einem der vorstehenden Ansprüche, **dadurch gekennzeichnet, dass** die Bremsmittel (43) derart gestaltet sind, dass im Falle eines Fressens der Reibverbindungsmittel (50) der zweite Widerstand durch den Piloten, der von Hand auf den Hebel (30) einwirkt, überwunden werden kann, um die Hauptwelle (10) in Drehung um die Hauptachse (X10) anzutreiben.

## Claims

1. A system for controlling aircraft gas, including:
- a main shaft (10), which defines a main axis (X10), which is freely rotary mounted about the main axis relative to a frame (2) of the aircraft, and whose angular position about the main axis controls a propulsion of the aircraft,
- a lever (30), which is integrally connected in rotation about the main axis (X10) to the main shaft (10) and which can be manually actuated by a pilot,
- friction connection means (50), which are functionally interposed without clearance between the main shaft (10) and the frame (2) and which are adapted to prevent by friction the driving of the main shaft in rotation about the main axis (X10) relative to the frame by applying a first resistance, this first resistance being provided to be surpassed by the pilot acting manually on the lever to drive the main shaft in rotation about the main axis, and
- an automatic regulation device (40), which is capable of automatically controlling the driving of the main shaft (10) in rotation about the main axis (X10) and which comprises:
- a gear motor unit (41), fixedly carried by the frame (2) and having an outlet (42) which can be driven in displacement relative to the frame by a motor and a gear unit of the gear motor unit,
- mechanical coupling means (44), which are adapted to transmit, without clearance and reversibly, the movement between the outlet (42) of the gear motor unit (41) and the main shaft (10) via the friction connection means (50), so that, by actuation of the gear motor unit, to ensure a rotation of the main shaft (10) about the main axis (X10) relative to the frame (2) as long as a resistance to this rotation remains less than the first resistance, and
- brake means (43) which are distinct from the coupling means (44), these brake means being fixedly carried by the frame (2) and being adapted to prevent the driving in displacement of the outlet (42) of the gear motor unit (41) relative to the frame (2) by applying a second resistance which is greater than the first resistance.

2. The control system according to claim 1, **characterized in that** the outlet (42) of the gear motor unit (41) can be rotatably driven about a secondary axis (X40), and **in that** the coupling means (44) comprise a reversible and without clearance gear (45), including a first toothed wheel (45.1), integrally connected in rotation about the secondary axis at the outlet of the gear motor unit, and a second toothed wheel (45.2), integrally connected in rotation about the main axis (X10) to the main shaft (10) by the friction connection means (50).

3. The control system according to claim 2, **characterized in that** the secondary axis (X40) extends perpendicular to the main axis (X10), and **in that** the gear (45) is conical or integrated in a transmission angle.

4. The control system according to any of claims 2 or 3, **characterized in that** the friction connection means (50) include at least one friction part (51, 52) which:
- is integrally connected to the main shaft (10) both in rotation about the main axis (X10) and in translation along the main axis, and
- rubs without clearance against the second toothed wheel (45.2) so as to generate the first resistance between the second toothed wheel and the friction part.

5. The control system according to claim 4, **characterized in that** there are provided two friction parts (51, 52) which are arranged on either side, along the main axis (X10), of the second toothed wheel (45.2).

6. The control system according to any of claims 4 or 5, **characterized in that** the friction part or any (45.2) of the friction parts is connected to the main shaft (10) by an assembly device (53) which is adapted, both, to block without clearance the friction part and the main shaft (10) in rotation about the main axis (X10) relative to each other, and to resiliently press said friction part against the second toothed wheel (45.2).

7. The control system according to any one of the preceding claims, **characterized in that** the brake means (43) are with friction, preventing by friction the driving in displacement of the outlet (42) of the gear motor unit (41).

8. The control system according to any one of the preceding claims, **characterized in that** the brake means (43) are passive so as to apply the second resistance as well when the gear motor unit (41) drives the outlet (42) in displacement as when the gear motor unit does not drive the outlet in displacement.

9. The control system according to any one of claims 1 to 7, **characterized in that** the brake means (43) are active so as to apply the second resistance only when the gear motor unit (41) does not drive the outlet (42) in displacement.

10. The control system according to any one of the preceding claims, **characterized in that** the brake means (43) are designed so that in the event of seizure of the friction connection means (50), the second resistance can be surpassed by the pilot acting manually on the lever (30) to drive the main shaft (10) in rotation about the main axis (X10).
